# EUROPÄISCHE PATENTANMELDUNG

(11) **EP 1 119 121 A2**
(43) Veröffentlichungstag der Anmeldung: **25.07.2001**
(21) Anmeldenummer: 00890363.5
(22) Anmeldetag: 30.11.2000
(51) Int. Cl.: H04H 1/00, H04H 5/00

(54) **Verfahren und Vorrichtung zur digitalen Funk-Übertragung von Audiosignalen**

(30) Priorität: 03.12.1999 AT 204099
(71) Anmelder: AKG Acoustics GmbH, 1230 Wien (AT)
(72) Erfinder: Kremsl, Andreas, Dipl.-Ing., 2823 Pitten (AT); Schlager, Peter, Dipl.-Ing., 3204 Kirchberg a.d. Pielach (AT); Lang, Werner, 1210 Wien (AT); Nell, Kurt, Dipl.-Ing., 2384 Breitenfurt (AT); Stöttinger, Ernst, Dipl.-Ing., 2344 Maria Enzersdorf (AT)
(74) Vertreter: Patentanwälte BARGER, PISO & PARTNER

(57) **Zusammenfassung**

Die Erfindung betrifft ein Verfahren zur digitalen Funk-Übertragung von Mehrkanal-Audiosignalen von einem Abspielgerät zu zumindest einem Lautsprecher mit einem Sender und einem Empfänger.

Die Erfindung ist dadurch gekennzeichnet, daß das vom Abspielgerät abgenommene und gegebenenfalls in ein Stereosignal konvertierte Signal mittels eines im Sender vorgesehenen Abtastratenwandlers mit einem von einem quarzkontrollierten Pulsgenerator vorgegebenen Takt abgetastet wird und daß der Taktgenerator des Senders mit der Mittenfrequenz der im Empfänger verwendeten Taktrückgewinnung zumindest im wesentlichen genau übereinstimmt.

Die Erfindung betrifft auch eine Variante des Verfahrens und Vorrichtungen zur Durchführung der Verfahren.

## Beschreibung

Die Erfindung betrifft ein Verfahren und eine Vorrichtung zur digitalen Funk-Übertragung von Mehrkanal-Audiosignalen. Derartige Verfahren und Vorrichtungen werden beispielsweise bei der Funkübertragung von Audiosignalen von Abspielgeräten zu Kopfhörern verwendet.

Die Verwendung von Stereosignalen zum Erwecken des Eindruckes des räumlichen Hörens ist bereits seit langem bekannt. Man hat in der Folge dieses 2-Kanal-Systems in auf mehr als zwei Kanäle erweitert und verschiedentlich eingesetzt. Das Bekannteste dieser Systeme ist das Dolby-Surround-System mit je nach Ausführung 5 und mehr Kanälen, die über eine entsprechend große Anzahl von Lautsprechern, die rund um die Hörer positioniert sind, wiedergegeben werden und ein wirklich räumliches Hören ermöglichen.

Dieses räumliche Hören beim Menschen kommt einerseits dadurch zustande, daß der Schall einer punktförmigen Schallquelle mit leichter zeitlicher Differenz zu den beiden Ohren des Menschen gelangt (außer die Schallquelle befindet sich in der Symmetrieebene zwischen den Ohren) und daß darüberhinaus das Gehör des Menschen (insgesamt gesehen, samt Reflexionen und Absorbtionen an den Schultern etc.) eine äußerst komplexe Richtcharakteristik besitzt, die je nach Einfallswinkel das einfallende Signal stark verändert, bis es schließlich am Trommelfell abgenommen wird. Die unbewußte Kenntnis dieser Charakteristik, die von Mensch zu Mensch verschieden ist, ermöglicht es dem Menschen, eine Schallquelle im Raum zu orten.

Wenn nun ein Stereosignal oder durch entsprechende Zusammenfassung zu zwei Kanälen ein Mehrkanal-Audiosignal einem Hörer über Kopfhörer angeboten wird, so fallen alle diese Unterschiede weg und es kommt zum "im Kopf hören" bzw. zur Im-Kopf-Lokalisation, IKL.

Es gibt verschiedene Verfahren, die Mehrkanalsignale so aufzuarbeiten, daß sie den Kopfhörern vorgefiltert zugeführt werden, wobei die Filtercharakteristiken den Einfluß der menschlichen Ohren und ihrer unmittelbaren Umgebung simulieren. Darüberhinaus wird, mit entsprechender Laufzeitverschiebung, das am rechten Ohr angebotene Signal auch dem linken Ohr angeboten und umgekehrt.

Man kommt auf diese Weise zu einem überraschend komplexen und naturnahen Hörerlebnis, bei dem insbesondere das oft unangenehme, immer aber unnatürliche, "im Kopf hören", zuverlässig vermieden wird.

Die Verwendung sogenannter kabelloser Kopfhörer ist seit langem bekannt. Dabei werden die Kopfhörer mittels Batterien oder Akkumulatoren betrieben und die Übermittlung der Signale erfolgt über Funk oder Infrarot.

Diese Übertragung erfolgte ursprünglich analog, doch wurden mit der zunehmenden Verwendung digitaler Trägermedien (CD's, Bildplatten etc.) auch die Audiosignale in immer größerem Ausmaß digital übertragen.

Die digitale Übertragung von Audiosignalen oder eigentlich von Signalen jedweder Art bringt nun folgende Schwierigkeit mit sich: Um das Lesen der übermittelten Signale richtig durchzuführen, ist es notwendig, zu wissen, wann ein Informationspaket beginnt, da anders als bei der analogen Übertragung die übermittelte Information entweder vollständig richtig oder sinnlos ist. Es werden daher, gesteuert vom Taktgeber des Abspielgerätes der zu übertragenden Signale (CD-Spieler, Bildplatten-Lesegeräte etc.) von der Sendeeinrichtung an den dafür vorgesehenen Stellen der Übertragung Bit-Folgen vorgesehen, die vom Empfänger und dessen Auswerteelektronik, beispielsweise im Kopfhörer, erkannt werden und dazu führen, daß von dieser Stelle an die Information gelesen und verarbeitet wird.

Quasi spiegelbildlich zum Taktgeber des Abspielgerätes ist im Empfängerschaltkreis ebenfalls ein Taktgeber vorgesehen, der nach erfolgter Synchronisierung die Weiterverarbeitung der Signale bis zur nächsten Steuer-Bit-Folge im ankommenden Takt regelt und bei Erhalt der nächsten Steuer-Bit-Folge die Synchronisierung kontrolliert und notfalls wiederholt.

Diese Maßnahme ist notwendig, weil die Auswertung der empfangenen Signale dadurch erfolgt, daß zu Zeitpunkten, die eben durch den Taktgeber vorgegeben werden, die Signale abgelesen (abgetastet) werden und so die übertragene Information festgestellt wird.

Nun werden senderseitig die Informationen übertragen, die von der Elektronik des Abspielgerätes geliefert werden und man verwendet bei diesen Geräten Taktgeber, die den bisherigen Anforderungen genüge getan haben, wobei selbstverständlich die Übereinstimmung der Taktfrequenz von Gerät zu Gerät überhaupt keine Rolle gespielt hat, da diese Geräte ja jeweils für sich arbeiten und nicht miteinander verbunden sind. Gleichermaßen kommt es auch nur auf eine Taktstabilität an, die ausreichend ist, um die geräteinterne Informationsverarbeitung zu erlauben und keine hörbaren Effekte hervorzurufen.

So ist nach der Norm IEC 958 der Toleranzbereich für die Bit-Rate von Audiosignalen ± 1000 ppm . Eine jitterfreie Taktrückgewinnung bei so großen Unterschieden der Bitrate ist nur mit einem sehr breitbandigen Phasenregelkreis und sehr niedrigem Rauschpegel möglich. Soll der Jitter trotz eines hohen Rauschpegels, wie er bei Funkübertragungen sehr häufig vorkommt, ausreichend unterdrückt werden, so muß man den Phasenregelkreis sehr schmalbandig machen und das führt dazu, daß dieser nur so langsam einrastet, daß die Unterbrechungen der Audioübertragung unzumutbar lange dauern.

Nun ist aus regelungstechnischen Gründen die Rauschbandbreitenur um eine Größenordnung kleiner als der Fangbereich. Man erkennt daraus unmittelbar die Instabilität der weiter unten geschilderten Taktrückgewinnung.

Durch die Verwendung der Kopfhörer mit Datenübertragung über Funk tritt nun das Problem auf, daß ein und derselbe Kopfhörer bei unterschiedlichen Geräten verwendet wird und auch die im Laufe der Zeit sich änderndenden Taktraten erfassen, berücksichtigen und kompensieren können muß.

Auch dies stellt an und für sich noch kein Problem dar, da mit Hilfe eines als Taktrückgewinnung bezeichneten Phasenregelkreises im Empfänger der Abstand der Impulsflanken des selbst (im Empfänger) erzeugten Taktsignales mit den Impulsflanken des einlagenden Datenstroms verglichen wird und aus der festgestellten zeitlichen Differenz der verglichenen Flanken ein Fehlersignal abgeleitet wird, mit dem Frequenz und Phase des selbsterzeugten Taktes nachgeregelt werden. Ist die Deckung der Flanken erreicht, so ist die Taktrückgewinnung perfekt und man spricht vom eingerastetem Zustand.

Zum Einrastvorgang: Erst, wenn die Taktrückgewinnung sich im eingerasteten Zustand befindet, beginnt die noch notwendige Synchronisierung des Empfängers. Der Decoder sucht systematisch ein periodisch wiederholtes gleichbleibendes Bit oder eine Bit-Gruppe, das (die) vom Codierer senderseitig zur Markierung der Wortgrenzen periodisch in den Datenstrom eingefügt wird. Erst, wenn der Empfänger synchronisiert ist, d.h. die vom Empfänger erwarteten Synchronisierungs-Bits (oder Worte) mit den empfangenen Synchronisierungsbits (oder Worten) übereinstimmen, wird das Audiosignal zum Kopfhörer durchgeschaltet. Man erkennt daraus, daß bei einmal ausgerasteter Taktrückgewinnung auch bei sofortigem Wiederfinden des Signals eine deutlich hörbare unangenehme Unterbrechung im Kopfhörer eintritt.

Es kann nun im Empfangsbereich eines solchen Gerätes durchaus der Fall sein, daß durch die unvermeidliche Mehrwegausbreitung der Funkwellen der Empfangspegel so abgeschwächt wird, daß die Taktrückgewinnung versagt. Es kommt dann zum Ausrasten und die Auswerteelektronik im Empfänger liefert nur Rauschen, bzw. ein unangenehmes Störsignal. Um dieses für den Benutzer unangenehme Rauschen zu verhindern, haben viele derartige Systeme eine sogenannte Rauschsperre, die die Weiterleitung von Signalen zu den Lautsprechern im Kopfhörer unterbindet, wenn die Taktrückgewinnung nicht eingerastet ist.

Da es nun geraume Zeit dauern kann, bis die Taktrückgewinnung wieder eingerastet ist, stellt die Gefahr des Austrastens einen gravierenden Nachteil der bekannten Technik dar.

Um das Ausrasten möglichst zu unterbinden, d.h. um die Störempfindlichkeit zu verringern, müßte man die Rauschbandbreite verringern. Dies wäre technisch kein Problem, doch kommt nun die Folge der oben genanten Verwendung von relativ billigen Quarzen mit großen Toleranzen ihrer Ganggenauigkeit bei den Abspielgeräten digitaler Speicher ins Spiel, da die von dort herrührenden Frequenzunterschiede es notwendig machen, den Fangbereich der Taktrückgewinnung so groß auszubilden, daß sie sowohl die schnellste als auch die langsamste Bit-Rate der verschiedenen Geräte einrasten kann.

Die Erfindung hat das Ziel, dieses Problem zu lösen und ein Verfahren und eine Vorrichtung der eingangsgenannten Art zu schaffen, bei der die Störempfindlichkeit der Taktrückgewinnung gering ist und es dennoch möglich ist, die unterschiedlichsten am Markt befindlichen und somit vorgegebenen Taktfrequenzen zu verarbeiten.

Erfindungsgemäß wird dieses Problem dadurch gelöst, daß das vom Abspielgerät abgenommene und gegebenenfalls in eine Stereosignal konvertiertes Signal mittels eines im Sender vorgesehenen Abtastratenwandlers mit einem von einem quarzkontrollierten Pulsgenerator vorgegebenen Taktes abgetastet wird und daß der Taktgenerator des Senders mit der Mittenfrequenz eines bevorzugt spannungskontrollierten Auarzoszillators der im Empfänger verwendeten Taktrückgewinnung zumindest im wesentlichen genau übereinstimmt.

In einer Variante der Erfindung ist der Abtastratenwandler durch die Kombination eines auf der Analogseite mit einem A/D-Wandler verbundenen D/A-Wandler ersetzt.

Durch diese Maßnahme wird das geräteseitig auf zwei Kanäle reduzierte Signal durch den Abtastratenwandler unabhängig vom Abspielgerätequarz auf eine Taktrate gebracht, die sowohl von Gerät zu Gerät als auch innerhalb der Betriebsbedingungen und der Lebensdauer des Gerätes praktisch konstant ist und daher mit dem empfängerseitigen Taktrückgewinnungsregelkreis bestmöglich zusammenwirkt. Wegen des geringen Ziehbereiches des bevorzugt spannungskontrollierten Quarzoszillators ist auch die Rauschbandbreite der Taktrückgewinnung entsprechend klein. Daher ist diese sehr unempfindlich gegen Rauschen und Störungen, sodaß der Verlust der Einrastung - das Ausrasten - in so gut wie allen Fällen innerhalb des Empfangsbereiches des Empfängers zuverlässig vermieden werden kann.

Da die Umtaktung im Sender stattfindet, wird im Empfänger kein neuer Bauteil benötigt, was sowohl für den Tragekomfort im Falle von Kopfhörern als auch für den Stromverbrauch wegen des Batteriebetriebes günstig ist. Da diese Umtaktung an der Stelle des Datenstromes stattfindet, an der der in Zweikanalform, als Stereosignal, vorliegt, ist der Aufwand für die benötigten Bauteile und damit die Investitions- und Arbeitskosten minimal.

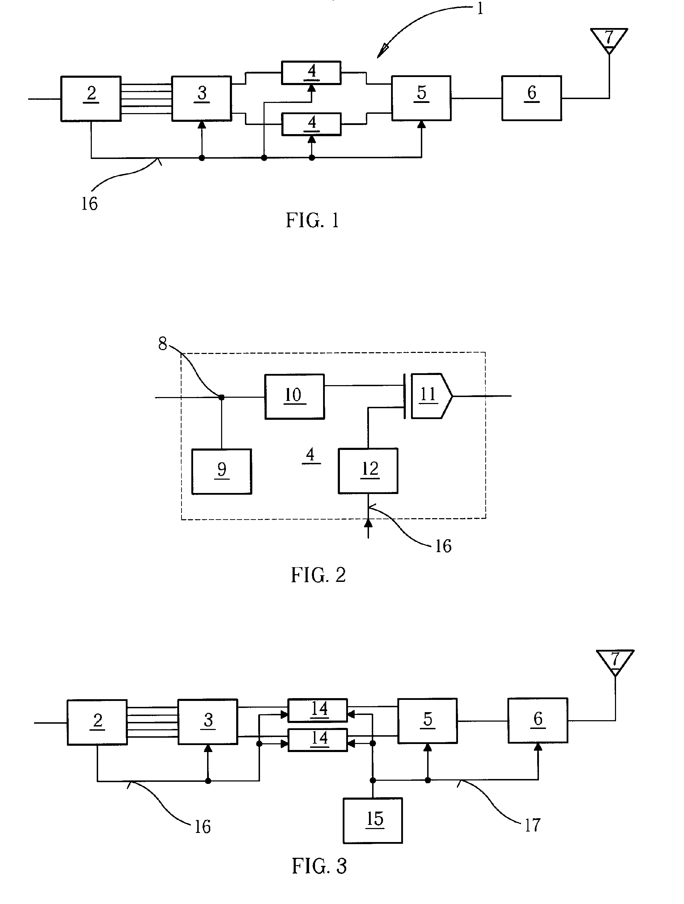

Die Erfindung wird im folgenden an Hand der Zeichnung näher erläutert. Dabei zeigt die Fig. 1 den senderseitigen Aufbau gemäß dem Stand der Technik,
die Fig. 2 die spezielle Ausbildung gemäß der W09725834A, somit ebenfalls gemäß dem Stand der Technik und die Fig. 3 einen erfindungsgemäßen Sender.

Wie aus Fig. 1 ersichtlich ist, bestehen die mit den Abspielgeräten gemäß dem Stand der Technik arbeitenden Sender 1 aus einem Dolby-Decodierer 2, einem binauralen Syntheseschaltkreis 3, dessen Ausgang ein Stereosignal ist, das gemäß dem Stand der Technik in einer Modifiziereinheit 4 verändert wird, um das Ausrasten der Taktrückgewinnung im Empfänger möglichst zu verhindern, einem anschließenden Codierer 5, der die beiden Signalströme zu einem durchgehenden Signalstrom vereint und einem UHF-Teil 6 in dem der Signalstrom den im UHF-Teil erzeugten Träger, der über die Antenne 7 abgestrahlt wird, moduliert. Es werden alle Bausteine, die bei dieser Ausführung gemäß dem Stand der Technik verwendet werden, im Takt 16 des Taktgebers des Abspielgerätes getaktet, der die oben genannten Nachteile, insbesondere einen merklichen Jitter, aufweist und die erfindungsgemäß zu lösenden Probleme schafft.

Eine gemäß dem Stand der Technik verwendete Methode zur Verringerung der Häufigkeit des Ausrastens ist in Fig. 2 dargestellt. Diese Fig. 2 zeigt einen der beiden Modifizierblöcke 4. Es wird das einlangende Signal mit einem Rauschsignal aus einem Rauschgenerator 9 an der Vereinigungsstelle 8 überlagert, damit zuverlässig eine ausreichende Anzahl von Flanken gebildet werden, die die Taktrückgewinnung im Empfänger erkennen und benutzen kann. Anschließend wird das Binär-Signal im Filter 10 in ein bipolares Signal umgewandelt, somit wird die Schaltschwelle auf Null Volt gesetzt, sodaß das Rauschen wirksam wird, wenn über längere Zeit keine Impulsflanke auftritt. Eine zusätzliche Maßnahme ist das nachfolgende "Exklusive Oder" das den Datenstrom mit einer altrernierenden Bitfolge verknüpft, auch dies zur Erreichung ausreichend vieler Flanken. Das vom Sender mit Rauschen modulierte digitale Signal wird im Empfänger, einem digitalen (Funk-) Kopfhörer, so bearbeitet, daß das überlagerte Rauschen wieder entfernt wird un auch die alternierende Bitfolge wieder in die ursprüngliche folge umgewandelt wird.

Zum Jittern: Wenn man ideal rechteckige Symbole (digitale Signalfolge) von 0 und 1 durch ein Filter schickt, so erhält man eine "Verschmierung" der Datenimpulse, die man als Intersymbolinterferenz (zufolge der nichtlinearen Verarbeitung) bezeichnen kann. Wenn eine solche ursprünglich ideale Datenfolge durch Funkübertragung weitergeleitet werden soll, ist man gezwungen, den Filter so schmal wie möglich zu machen, um in einem begrenzten Frequenzbereich möglichst viele Kanäle unterzubringen. Nun wird ein Impuls im Zeitbereich umso mehr verschmiert, umso schmäler das Filter ist. Daraus folgt, daß zum Abtastzeitpunkt der Abtastwert am Empfängerausgang nicht mehr genau der eigentlich gesendete Wert von 0 oder 1 ist, sondern, in Abhängigkeit von der Vorgeschichte, beispielsweise 0,3 oder 0,8. Wenn diese verformten Impulse durch eine Auswertung so beurteilt werden, daß beispielsweise Werte kleiner als 0,5 als "Null" und Werte größer als 0,5 als "Eins" angesehen werden und in eine rechteckige Mäanderfunktion umgewandelt werden, ist unmittelbar einsichtig, daß die Abschnitte mit dem Wert 0 bzw. dem Wert 1 unterschiedliche Länge aufweisen, d.h. die Flanken dieser Impulse wackeln um den eigentlich richtigen Wort, dies nennt man Jittern. Durch diese Umformung der verschmierten frequenzbandbegrenzten Daten entsteht eine Verbreiterung des Spektrums. Um den durch die nichtlineare Verarbeitung der Intersymbolinterferenz erzeugten Jitter zu eliminieren und auf möglichst nur eine Spektrallinie, nämlich den Takt, zu reduzieren, filtert man das spektral verbreiterte Signal mit einem Phasenregelkreis, der einem schmalbandigen Mitlauf-Filter entspricht. Dieses Verfahren nennt man Taktrückgewinnung.

In absoluten Werten kann gesagt werden, daß der Effektiv-Wert des Jitters 100 Pikosekunden nicht überschreiten soll, weil er sonst bereits als Störgeräusch hörbar wird. Spektral gesehen, kann man den Jitter als Seitenbandrauschen des Taktsignals ansehen, zu dessen Unterdrückung bei der Taktrückgewinnung ein Schmalbandfilter verwendet wird.

Um die oben genannten Probleme zu vermeiden, ist ein erfindungsgemäßer Sender so, wie in Fig. 3 schematisch im Blockschaltbild dargestellt, aufgebaut:
Eingangsseitig ist wieder ein Dolby-Decodierer 2 vorgesehen, an dessen Ausgang ein Mehrkanalsignal steht, das durch den binauralen Syntheseschaltkreis 3 in ein Stereosignal umgewandelt wird. Dieses Stereosignal wird erfindungsgemäß einem Abtastratenwandler 14 (pro Kanal) zugeführt, dessen ausgangseitiger Takt 17 vom erfindungsgemäß vorgesehenen Taktgenerator 15 stammt. Dieser Taktgenerator ist erfindungsgemäß genau und stabil in einem eng vorgegebenen Rahmen, sodaß der dem Codierer 5 zugeführte Datenstrom nach seiner Vereinigung auch im Hochfrequenzteil 6 den zu modulierenden Träger mit hoher Genauigkeit moduliert, so daß der empfängerseitige Taktrückgewinnungskreis auf geringe Empfindlichkeit und damit hohe Stabilität ausgelegt sein kann. Es werden selbstverständlich auch der Codierer und der Modulator durch den erfindungsgemäß vorgesehenen sendereigenen Taktgenerator 15 angesteuert und getaktet.

Durch die Verwendung des frequenzgenauen und phasenreinen Taktgenerators 15 wird der Jitter derart verringert, daß der Taktrückgewinnung-PLL eine so hohe Güte aufweisen kann, daß er in der Lage ist, auch mehrere gestörte Intervalle zu überbrücken (somit quasi blind, auf eigene Verantwortung, das Empfangssignal abtastet und auswertet), bevor er wieder eine meßbare Flanke benötigt, um einzurasten.

Das Gleiche erreicht man durch die Verwendung einews D/A und eines A/D-Wandler, deren Analogseiten zueinander gerichtet sind. Es wird dann das einlangende Digitalsignal im D/A-Wandler analogisiert und mit dem genau getakteten A/D-Wandler in einen jitterfreien digitalen Datenstrom übergeführt.

## Patentansprüche

1. Verfahren zur digitalen Funk-Übertragung von Mehrkanal-Audiosignalen von einem Abspielgerät zu zumindest einem Lautsprecher mit einem Sender und einem Empfänger, dadurch gekennzeichnet, daß das vom Abspielgerät abgenommene und gegebenenfalls in ein Stereosignal konvertierte Signal mittels eines im Sender vorgesehenen Abtastratenwandlers mit einem von einem quarzkontrollierten Pulsgenerator vorgegebenen Takt abgetastet wird und daß der Taktgenerator des Senders mit der Mittenfrequenz der im Empfänger verwendeten Taktrückgewinnung zumindest im wesentlichen genau übereinstimmt.

2. Verfahren zur digitalen Funk-Übertragung von Mehrkanal-Audiosignalen von einem Abspielgerät zu zumindest einem Lautsprecher mit einem Sender und einem Empfänger, dadurch gekennzeichnet, daß das vom Abspielgerät abgenommene und gegebenenfalls in ein Stereosignal konvertierte Signal mittels eines im Sender vorgesehenen D/A-Wandlers in Kombination mit einem A/D-Wandler mit einem von einem quarzkontrollierten Pulsgenerator vorgegebenen Takt abgetastet wird und daß der Taktgenerator des Senders mit der Mittenfrequenz der im Empfänger verwendeten Taktrückgewinnung zumindest im wesentlichen genau übereinstimmt.

3. Vorrichtung zur Durchführung des Verfahrens nach Anspruch 1, dadurch gekennzeichnet, daß senderseitig für jeden Kanal des vom Abspielgerät abgenommenen und gegebenenfalls in ein Stereosignal konvertierten Signals ein Abtastratenwandlers vorgesehen ist, der mit einem von einem quarzkontrollierten Pulsgenerator vorgegebenen Takt abgetastet wird und daß der Taktgenerator des Senders mit der Mittenfrequenz der im Empfänger verwendeten Taktrückgewinnung zumindest im wesentlichen genau übereinstimmt.

4. Vorrichtung zur Durchführung des Verfahrens nach Anspruch 2, dadurch gekennzeichnet, daß senderseitig für jeden Kanal des vom Abspielgerät abgenommenen und gegebenenfalls in ein Stereosignal konvertierten Signals ein D/A-Wandler in Kombination mit einem A/D-Wandler vorgesehen ist, wobei letzterer mit einem von einem quarzkontrollierten Pulsgenerator vorgegebenen Takt abgetastet wird und daß der Taktgenerator des Senders mit der Mittenfrequenz der im Empfänger verwendeten Taktrückgewinnung zumindest im wesentlichen genau übereinstimmt.
